# EUROPEAN PATENT APPLICATION

(11) **EP 4 794 258 A1**
(43) Date of publication of application: **19.08.2026**
(21) Application number: 26157375.2
(22) Date of filing: 09.02.2026
(51) Int. Cl.: H04L 9/08

(54) **RANDOM NUMBER GENERATION DEVICE FOR GENERATING RANDOM NUMBER USING SEED MATERIAL PROCESSED AT ONE TIME, OPERATING METHOD OF THE RANDOM NUMBER GENERATION DEVICE, AND ELECTRONIC DEVICE**

(30) Priority: 17.02.2025 KR 20250020355
(71) Applicant: Samsung Electronics Co., Ltd., Suwon-si, Gyeonggi-do 16677 (KR)
(72) Inventor: PARK, Taewook, 16677 Suwon-si (KR); OH, Eunhye, 16677 Suwon-si (KR); LEE, Yongki, 16677 Suwon-si (KR)
(74) Representative: Marks & Clerk LLP

(57) **Abstract**

A random number generation device includes an instantiate and reseed function logic configured to receive an entropy input having a size smaller than or equal to a reference size of a reference seed material that may be processed at one time during a crypto operation and configured to repeatedly perform the crypto operation, based on a seed material configured to be processed at one time during the crypto operation in a current crypto operation sequence and an operation result in a previous crypto operation sequence, and a random number generation logic configured to generate random number data.

## Description

### FIELD

The disclosure relates to an electronic device, and more particularly, to a random number generation device for generating a random number by using a seed material processed at one time, an operating method of the random number generation device, and an electronic device.

### BACKGROUND

As technology advances and personalized electronic devices such as smartphones become more widespread, users of electronic devices can encrypt their personal information and other important data and store them on a storage device. Electronic devices may have enhanced data security by utilizing user-defined passwords, patterns, biometric information, etc.

To ensure data security, a random number generator may be included in the electronic devices. Random number generators may be designed according to standards published by the National Institute of Standards and Technology (NIST) (e.g., NIST Special Publication 800-90A and/or 800-90C). Random number generators may process cryptographic operations using entropy input when instantiating or reseeding. However, according to the standards (e.g., NIST Special Publication 800-90A and/or 800-90C), a total entropy input required for instantiating or reseeding is determined, and random number generators of the related art store the total entropy input until instantiating or reseeding is completed. Accordingly, it is difficult to reduce a size of a memory and also it is difficult to reduce a size of the electronic device.

In addition, the size of the total entropy input required according to the standards (e.g., NIST Special Publication 800-90A and/or 800-90C) may be set variously depending on security strength, etc. As the size of the total entropy input changes, the random number generators of the related art are designed differently. Accordingly, manufacturing costs are increased and variously changing total entropy inputs are not flexibly handled.

### SUMMARY

The disclosure provides a random number generation device including a seed material memory having an optimal size for generating a random number by using a seed material processed at one time, an output memory, and a crypto engine, a method of operating the random number generation device, and an electronic device.

According to an aspect of the disclosure, there is provided a random number generation device including an instantiate and reseed function logic configured to receive, from an entropy source, for each of at least some crypto operation sequences among a plurality of crypto operation sequences, an entropy input having a size smaller than or equal to a reference size of a reference seed material that may be processed at one time during a crypto operation; repeatedly perform the crypto operation in a current crypto operation sequence, based on a seed material configured to be processed at one time during the crypto operation in the current crypto operation sequence and an operation result of the crypto operation in a previous crypto operation sequence; and output a derivation function signal corresponding to an internal state, based on a plurality of operation result values after the plurality of crypto operation sequences are completed, and a random number generation logic configured to generate random number data comprising a random number, based on the derivation function signal.

According to another aspect of the disclosure, there is provided an operating method of a random number generation device, the operating method including receiving, from an entropy source for each of at least some crypto operation sequences among a plurality of crypto operation sequences, an entropy input having a size smaller than or equal to a reference size of a reference seed material that may be processed at one time in a crypto operation, repeatedly performing the crypto operation in a current crypto operation sequence based on seed material configured to be processed at one time during the crypto operation in the current crypto operation sequence and an operation result of the crypto operation in a previous crypto operation sequence, outputting a derivation function signal corresponding to an internal state, based on a plurality of operation result values after the plurality of crypto operation sequences are completed, and generating random number data comprising a random number, based on the derivation function signal.

According to another aspect of the disclosure, there is provided an electronic device including a random number generator configured to generate a random number, and a processor configured to perform an encryption algorithm based on the random number. The random number generator includes an instantiate and reseed function logic configured to: receive, from an entropy source, for each of at least some crypto operation sequences among a plurality of crypto operation sequences, an entropy input having a size smaller than or equal to a reference size of a reference seed material that may be processed at one time during a crypto operation; repeatedly perform the crypto operation in a current crypto operation sequence, based on a seed material configured to be processed at one time during the crypto operation in the current crypto operation sequence and an operation result of the crypto operation in a previous crypto operation sequence; and output a derivation function signal corresponding to an internal state, based on a plurality of operation result values after the plurality of crypto operation sequences are completed, and a random number generation logic configured to generate random number data comprising the random number, based on the derivation function signal.

At least some of the above and other features of the invention are set out in the claims.

### BRIEF DESCRIPTION OF DRAWINGS

Example embodiments will be more clearly understood from the following detailed description taken in conjunction with the accompanying drawings in which:
FIG. 1 is a block diagram of an electronic device according to embodiments;
FIG. 2 is a block diagram of an instantiate and reseed function unit according to embodiments;
FIG. 3 is a diagram for describing information according to embodiments;
FIGS. 4A, 4B, and 4C are diagrams illustrating generating a derivation function signal according to one or more embodiments;
FIGS. 5A, 5B, and 5C are diagrams illustrating generating a derivation function signal according to one or more embodiments;
FIGS. 6A, 6B, and 6C are diagrams each illustrating generating a derivation function signal according to one or more embodiments;
FIG. 7 is a flowchart illustrating an operating method of a random number generation device, according to embodiments;
FIG. 8 is a flowchart for describing an embodiment of operation S120 of FIG. 7;
FIG. 9 is a flowchart for describing an embodiment of operation S220 of FIG. 8;
FIG. 10 is a flowchart illustrating another embodiment of operation S220 of FIG. 8; and
FIG. 11 is a flowchart illustrating a method of generating a derivation function signal, according to embodiments.

### DETAILED DESCRIPTION

Hereinafter, example embodiments will be described in detail with reference to the attached drawings.

The ordinal expressions "first," "second," etc. used in this specification may describe various components, regardless of order and/or importance, and are only used to distinguish one component from other components and do not limit the components. For example, a first user device and a second user device may represent different user devices, regardless of the order or importance. For example, without departing from the scope of the rights set forth herein, a first component may be renamed a second component, and similarly, the second component may also be renamed the first component.

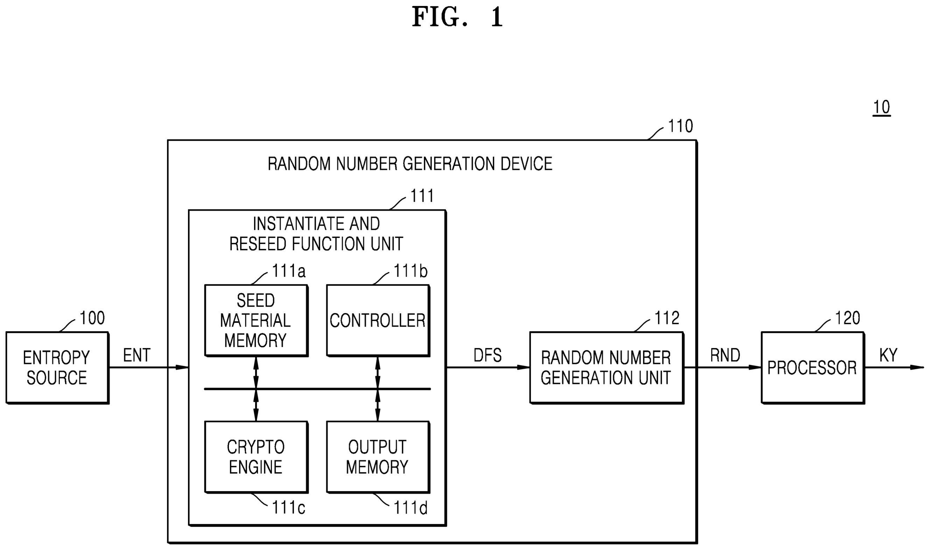

FIG. 1 is a block diagram of an electronic device 10 according to embodiments.

Referring to FIG. 1, the electronic device 10 may be a subsystem included in a system varying from, for example, a stationary computing system such as a server, a desktop computer, etc., a portable computing system such as a mobile phone, a wearable device, a laptop computer, etc., or a standalone computing system such as a home appliance, industrial equipment, or a vehicle.

In embodiments, the electronic device 10 may include an entropy source 100, a random number generation device 110, and a processor 120. According to some embodiments, the entropy source 100 may be external to the electronic device 10.

The entropy source 100 may be configured to generate an entropy input ENT and configured to provide the entropy input ENT to the random number generation device 110.

The random number generation device 110 may be configured to generate random number data RND including a random number (random number or random bit), based on the entropy input ENT. For example, the random number generation device 110 may be implemented as a random number generation device such as a pseudo random number generator (PRNG), a deterministic RNG (DRNG), a true RNG (TRNG), a deterministic random bit generator (DRBG), etc. The random number generation device 110 according to embodiments may comply with provisions of the standards of the National Institute of Standards and Technology (e.g., NIST Special Publication 800-90A and/or 800-90C) and may perform all functions in the standards (e.g., NIST Special Publication 800-90A and/or 800-90C). If the random number generation device 110 according to embodiments is a DRBG, the DRBG may be implemented as Counter Mode Deterministic Random Bit Generator(CTR_DRBG), Hash-based Deterministic Random Bit Generator(HASH_DRBG), etc.

In embodiments, the random number generation device 110 may include an instantiate and reseed function unit (or referred to as an instantiate and reseed function logic) 111 and a random number generation unit (or referred to as a random number generation logic) 112.

The instantiate and reseed function unit 111 may receive the entropy input ENT from the entropy source 100. In embodiments, the entropy input ENT may have a size that is processed at one time during a cryptographic operation (or "crypto operation" for short) of the instantiate and reseed function unit 111. The instantiate and reseed function unit 111 may be configured to generate a derivation function signal DFS corresponding to an internal state (e.g., an initial state), based on the entropy input ENT.

The instantiate and reseed function unit 111 may be configured to receive, from the entropy source 100, for each of at least some crypto operation sequences among a plurality of crypto operation sequences, an entropy input having a size smaller than or equal to a reference size of a reference seed material that may be processed at one time during a crypto operation.

The instantiate and reseed function unit 111 may be configured to repeatedly perform the crypto operation in a current crypto operation sequence, based on a seed material configured to be processed at one time during the crypto operation in the current crypto operation sequence and an operation result of the crypto operation in a previous crypto operation sequence.

The instantiate and reseed function unit 111 may be configured to output a derivation function signal corresponding to an internal state, based on a plurality of operation result values after the plurality of crypto operation sequences are completed.

In embodiments, the instantiate and reseed function unit 111 may include a seed material memory 111a, a controller 111b, a crypto engine 111c, and an output memory 111d.

The seed material memory 111a may store the entropy input ENT provided from the entropy source 100. The seed material memory 111a may communicate with the controller 111b, receive at least one control data including various values from the controller 111b, and store the values of the control data. Various data stored in the seed material memory 111a may be referred to as a seed material.

The controller 111b may provide at least one piece of control data to the seed material memory 111a. The controller 111b may provide a control signal to the crypto engine 111c to control an operation of the crypto engine 111c.

The crypto engine 111c may perform a crypto operation based on the control signal from the controller 111b. The crypto engine 111c may store a value of an operation result of the crypto operation in the output memory 111d. The crypto engine 111c may communicate with the output memory 111d, receive the value of the operation result from the output memory 111d as a value of an intermediate result, and use the value of the intermediate result during a crypto operation. For example, the crypto engine 111c may be implemented using various engines such as Advanced Encryption Standard (AES)-256 and Secure Hash Algorithm (SHA)-256.

The output memory 111d may store the value of the operation result provided from the crypto engine 111c. In the output memory 111d, storage areas may be allocated to store respective values of the operation result.

The random number generation unit 112 may be configured to generate the random number data RND based on the derivation function signal DFS.

The processor 120 may be configured to generate a cryptographic key KY by performing an encryption algorithm based on the random number data RND. The cryptographic key KY may be used for an authentication operation.

As described above, by storing only an amount of the entropy input ENT required for the crypto engine 111c to operate once (or to process at one time during a cryptographic operation) in the seed material memory 111a while the instantiate and reseed function unit 111 is operating, a size of each of the seed material memory 111a and the output memory 111d may be reduced.

In addition, as described above, by reducing the size of each of the seed material memory 111a and the output memory 111d, areas of the random number generation device 110 and the electronic device 10 including the same may be reduced, thereby achieving improved device integration.

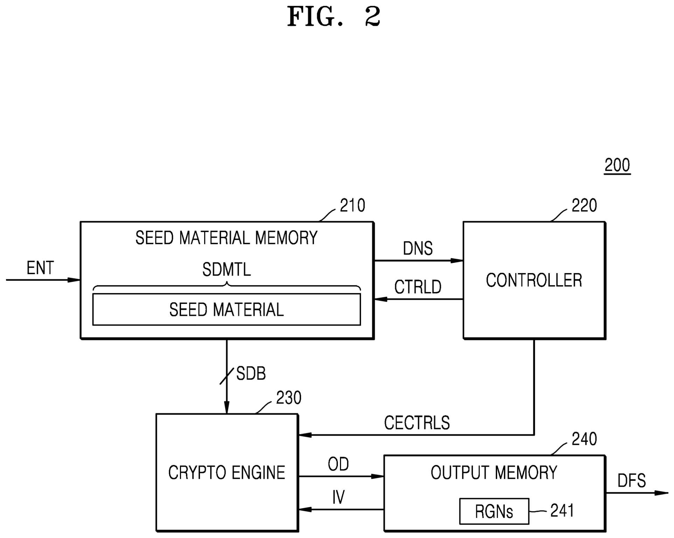

FIG. 2 is a block diagram of an instantiate and reseed function unit 200 according to embodiments.

Referring to FIG. 2, the instantiate and reseed function unit 200 may correspond to the instantiate and reseed function unit 111 of FIG. 1. When instantiate or reseed is performed (e.g., when instantiate or reseed is enabled), the instantiate and reseed function unit 200 may preferentially perform a crypto operation that uses the same entropy input, and may update control information used in that crypto operation. Additionally, the instantiate and reseed function unit 200 may store an intermediate result value of the preferentially processed crypto operation. The instantiate and reseed function unit 200 may then perform a crypto operation by using an entropy input that is input and a previously generated intermediate result value(s).

In embodiments, the instantiate and reseed function unit 200 may include a seed material memory 210, a controller 220, a crypto engine 230, and an output memory 240.

The seed material memory 210 may be configured to receive at least one of control data CTRLD and the entropy input ENT. Additionally, the seed material memory 210 may be configured to store at least one of the control data CTRLD and the entropy input ENT that is received, as a seed material SDMTL. For example, when instantiating or reseeding, the seed material memory 210 may store the seed material SDMTL that the crypto engine 230 may process at one time. When the entropy input ENT is stored in the seed material memory 210, the seed material memory 210 may provide, to the controller 220, a completion signal DNS indicating that collection of the entropy input ENT is completed. The seed material memory 210 may store at least one control data CTRLD provided from the controller 220. Data stored in the seed material memory 210 may be referred to as the seed material SDMTL, and the seed material SDMTL according to an embodiment may include a counter, an output length, and an entropy input corresponding to a certain crypto operation sequence, which will be described below. However, the disclosure is not limited thereto. A size (e.g., storage capacity) of the seed material memory 210 may be the reference size of the reference seed material. The reference seed material may be a seed material that may be processed at one time during a crypto operation of the crypto engine 230.

The controller 220 may generate the control data CTRLD including values that are used in configuring the seed material SDMTL. The controller 220 may generate and/or update the at least one control data CTRLD based on the completion signal DNS and provide the at least one control data CTRLD (e.g., the generated and/or updated control data) to the seed material memory 210. The control data CTRLD may include at least one value for configuring the seed material SDMTL. The at least one control data CTRLD may include a counter, an output length, and various other values. The counter may be a value representing a number of times a crypto operation is repeated in a crypto operation sequence, i.e., a number of repetitions. The output length may be a value indicating a size of the value of the operation result and/or a value indicating a size of a storage area allocated to store the value of the operation result in the output memory 240. The controller 220 may provide at least one control signal CECTRLS to the crypto engine 230 to control the operation of the crypto engine 230.

The crypto engine 230 may be configured to perform the crypto operation based on the seed material SDMTL and a plurality of operation result values of output data OD. Additionally, the crypto engine 230 may be configured to update the plurality of operation result values by storing the plurality of operation result values (e.g., the plurality of operation result values obtained by performing the crypto operation) in the output memory 240. The crypto engine 230 may initiate a crypto operation based on the control signal CECTRLS and receive a seed block SDB including the seed material SDMTL stored in the seed material memory 210. For example, the seed material SDMTL may include a counter, an output length, and an entropy input corresponding to a particular crypto operation sequence. For example, the seed block SDB may include an entropy input corresponding to a particular cryptographic operation sequence. For example, the seed block SDB may include control data such as a counter and an output length, and an entropy input corresponding to a certain crypto operation sequence. When a crypto operation is performed, the crypto engine 230 may store a value of the output data OD of the crypto operation in the output memory 240. The crypto engine 230 may receive the value stored in the output memory 240 as a value of an initial vector IV, and perform a crypto operation based on the value of the initial vector IV and the seed block SDB.

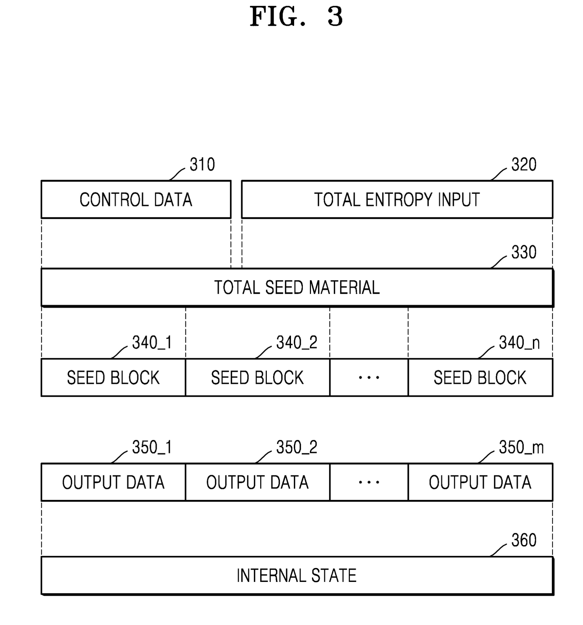

The output memory 240 may store the value of the output data OD of the crypto operation and provide the stored value to the crypto engine 230 as the value of the initial vector IV. When a plurality of crypto operation sequences are completed, the output memory 240 may output the derivation function signal DFS based on values of the output data OD provided from the crypto engine 230. The output memory 240 may include a plurality of storage areas (RGN) 241 in which the values of the output data OD are stored. For example, the plurality of operation result values (e.g., the values of the output data OD) of a previous crypto operation sequence may be stored in the plurality of storage areas 241, respectively. A value of corresponding output data OD may be stored in a corresponding storage area, and as the crypto operation sequence progresses, the value of the corresponding output data OD may be updated. A size of the output memory 240 may be determined based on a size of the output data OD output by the crypto engine 230 and a number of times (m (e.g., m is an integer greater than 1), refer to FIG. 3) that the crypto operation is repeated in one crypto operation sequence.

As described above, according to embodiments of the disclosure, in designing instantiate and reseed logic according to the standards (e.g., NIST Special Publication 800-90A and/or 800-90C), there may be an effect of optimizing the sizes of the seed material memory 210 and the output memory 240 by processing a total seed material of various sizes without changing a size of the seed material memory 210 and the size of the output memory 240, and an effect of optimizing the instantiate and reseed function unit 200 and an area of the random number generation device 110 including the instantiate and reseed function unit 200 by reducing the sizes of the seed material memory 210 and the output memory 240.

FIG. 3 is a diagram for describing information according to embodiments.

Referring to FIGS. 1 to 3, control data 310 (e.g., control data CTRLD in FIG. 2) is data generated by the controller 220, and may include various sizes (or lengths), such as, for example, a counter indicating the number of times the crypto operation of the crypto engine 230 is repeated, the size (or length) of an entropy input, a requested bit length, a maximum size of data that the crypto engine 230 may process at one time during the crypto operation, and a size of a derivation function signal. A size of the control data 310 may be determined in various ways.

A total entropy input 320 may be all of entropy inputs required to perform cryptographic operations in the random number generation device 110. A size of the total entropy input 320 may be determined based on a security strength (s) and an entropy (H) per bit of the entropy source 100. For example, according to the standards (e.g., NIST Special Publication (SP) 800-90A and/or 800-90C), when instantiating, a size of all of entropy inputs may be determined based on 1.5 times the security strength required by the DRBG (e.g., 1.5s), and when reseeding, the size of all of entropy inputs may be determined based on the security strength (e.g., s). A length of the total entropy input 320 required by DRBG may be determined as 1.5 s/H at a time of instantiation or s/H at a time of reseeding, depending on an entropy per bit of the entropy source 100. A value of the entropy per bit of the entropy source 100 may be greater than 0 and less than or equal to 1 (e.g., 0<H≤1).

The total seed material 330 may include the control data 310 and the total entropy input 320. For example, the total seed material 330 may correspond to concatenation between the control data 310 and the total entropy input 320. A size of the total seed material 330 may be a sum of the size of the control data 310 and the size of the total entropy input 320.

When the crypto engine 230 performs a single crypto operation, a maximum size of the seed material that the crypto engine 230 may process at one time may be determined in advance according to a type of the crypto engine 230 (e.g., CTR_DRBG, HASH_DRBG, HMAC_DRBG, etc.). For example, if the crypto engine 230 is AES-256, the AES-256 may process a seed material of up to 128 bits. For example, if the crypto engine 230 is SHA-256, SHA-256 may process a seed material of up to 512 bits. The total seed material 330 may be divided into a plurality of seed blocks 340_1 to 340_n (e.g., n is an integer greater than 1), and a number (n) of seed blocks 340_1 to 340_n may be determined based on the size of the total seed material 330 and the maximum size of the seed material that the crypto engine 230 may process at one time. For example, assuming that the size of the total seed material 330 is T and the maximum size of seed material that the crypto engine 230 may process at one time is k, the number (n) of the seed blocks 340_1 to 340_n may be determined by rounding up a value of T/k (e.g., Roundup(T/k)). However, the disclosure is not limited to the examples described above.

The maximum size of the seed material that the crypto engine 230 may process at one time may not be proportional to the size of the total seed material 330. In this case, sizes of at least some seed blocks among the plurality of seed blocks 340_1 to 340_n may be the same as each other, and sizes of remaining seed blocks among the plurality of seed blocks 340_1 to 340_n may be different from the size of the seed blocks having the same size. For example, a size of an nth seed block 340_n may be different from the sizes of the remaining seed blocks among the plurality of seed blocks 340_1 to 340_n, and the sizes of the remaining seed blocks of the plurality of seed blocks 340_1 to 340_n may be the same as each other.

The total seed material 330 may correspond to the concatenation between the control data 310 and the total entropy input 320, and the plurality of seed blocks 340_1 to 340_n may be seed blocks obtained by dividing the total seed material 330 into units of the maximum size of the seed material that the crypto engine 230 may process at one time. Thus, types of seed materials included in some seed blocks among the plurality of seed blocks 340_1 to 340_n, types of seed materials included in some other seed blocks, and types of seed materials included in still other seed blocks may be the same or different from each other.

In a crypto operation sequence, one seed block may be provided to the crypto engine 230. For example, in a first crypto operation sequence (or an initial crypto operation sequence), a first seed block 340_1 may be provided to the crypto engine 230; in a second crypto operation sequence, a second seed block 340_2 may be provided to the crypto engine 230; and in an nth crypto operation sequence (or the last crypto operation sequence), the nth seed block 340_n may be provided to the crypto engine 230. Accordingly, a number of crypto operation sequences performed by the crypto engine 230 may correspond to a number of seed blocks.

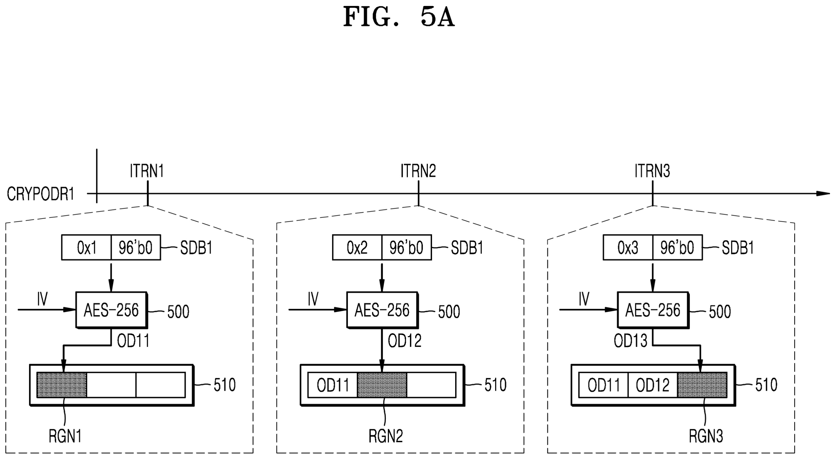

A plurality of pieces of output data 350_1 to 350_m may include values of operation results obtained when the crypto engine 230 performs a crypto operation by using the plurality of seed blocks 340_1 to 340_n, respectively. A number (m) of pieces of output data 350_1 to 350_m may correspond to a number of repetitions (m) of the crypto operation performed by the crypto engine 230, and may be determined based on the requested bit length and the size of output data generated by the crypto engine 230. The number of repetitions (m) is described below with reference to FIGS. 5A to 6C.

An internal state 360 corresponding to the derivation function signal DFS may be configured based on the plurality of pieces of output data 350_1 to 350_m. For example, the internal state 360 may include various information such as K (key length (or key size)), V(internal state value), C(constant of seed length), status, and working state according to the standards (e.g., NIST Special Publication 800-90A and/or 800-90C).

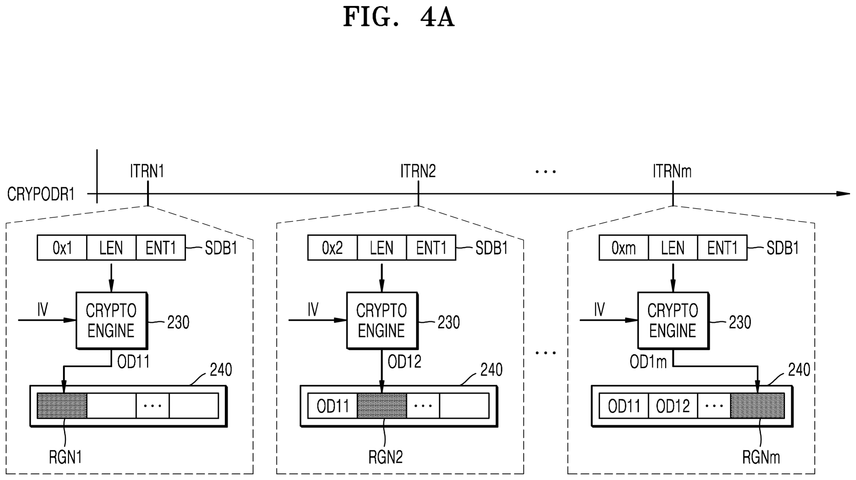

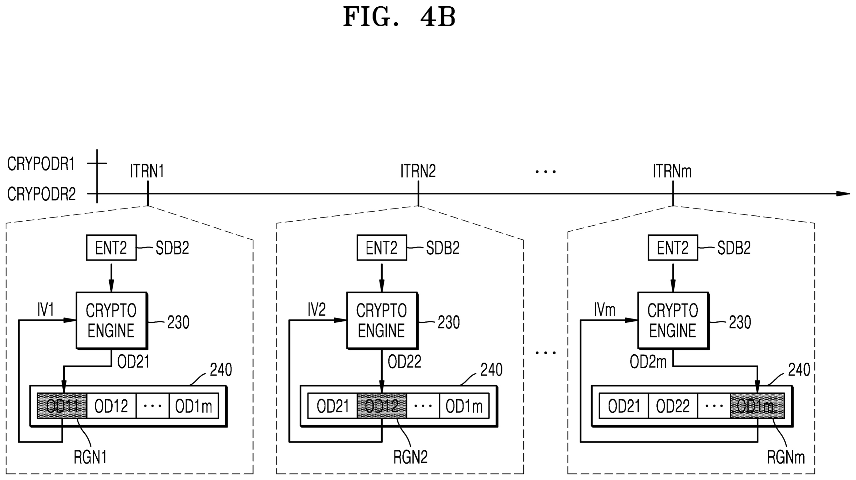

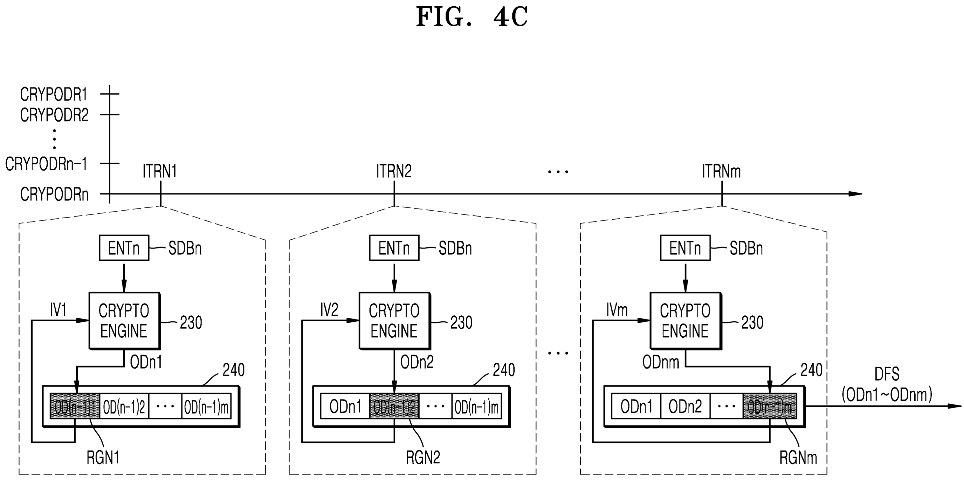

FIGS. 4A, 4B, and 4C are diagrams illustrating embodiments of generating a derivation function signal.

Referring to FIGS. 2, 3, 4A, 4B, and 4C, a number (n) of crypto operation sequences CRYPODR1 to CRYPODRn may correspond to a number of seed blocks and may be determined based on the size of the total seed material 330 of FIG. 3 and the maximum size of the seed material that the crypto engine 230 may process at one time (e.g., Roundup (T/k)). A number (m) of iterations ITRN1 to ITRNm in which the crypto operation of the crypto engine 230 is repeated may be determined based on the requested bit length and the size of the output data generated by the crypto engine 230.

Referring to FIG. 4A, in a first crypto operation sequence CRYPODR1 among a plurality of crypto operation sequences CRYPODR1 to CRYPODRn, the seed material memory 210 may be configured to provide a first seed material including first control data and a first entropy input, to the crypto engine 230. The first crypto operation sequence CRYPODR1 may correspond to the initial crypto operation sequence. In the first crypto operation sequence CRYPODR1, a first seed block SDB1 may be provided to the crypto engine 230 for each of the iterations ITRN1 to ITRNm. The first seed block SDB1 (e.g., the first seed material of the first seed block SDB1) may include a counter (e.g., "0x1", "0x2", ..., or "0xm" in FIG. 4A), at least one length (e.g., "LEN" in FIG. 4A), and a first entropy input ENT1. The first entropy input ENT1 may be the entropy input ENT provided to the instantiate and reseed function unit 200 in the first crypto operation sequence CRYPODR1.

In a first iteration ITRN1 of the first crypto operation sequence CRYPODR1, the first seed block SDB1 may be provided to the crypto engine 230. In this case, a counter of the first seed block SDB1 may be "0x1" indicating the first iteration ITRN1. The crypto engine 230 may perform a crypto operation by using the initial vector IV and the first seed block SDB1, and store a value of first output data OD11 in a first storage area RGN1 of the output memory 240. In an embodiment, the value of the initial vector IV may be a preset default value and may be stored in the output memory 240. A value of output data (e.g., the operation result value or the intermediate value) may be stored in the output memory 240 and used as the value of the initial vector IV in a crypto operation of a next crypto operation sequence.

In a second iteration ITRN2 of the first crypto operation sequence CRYPODR1, the first seed block SDB1 may be provided to the crypto engine 230. In this case, the counter of the first seed block SDB1 may be "0x2" indicating the second iteration ITRN2. The counter may be changed by the controller 220 each time a cryptographic operation is completed in one iteration and may be stored in the seed material memory 210. The crypto engine 230 may perform a crypto operation by using the value of the initial vector IV and the first seed block SDB1, and store a value of second output data OD12 in a second storage area RGN2 of the output memory 240.

Third to m-1th iterations may be performed in a manner as described above. In an mth iteration ITRNm of the first crypto operation sequence CRYPODR1, the first seed block SDB1 including a counter of "0xm" may be provided to the crypto engine 230, and the crypto engine 230 may perform a crypto operation using the value of the initial vector IV and the first seed block SDB1, and store a value of mth output data OD1m in an mth storage area RGNm of the output memory 240.

Referring to FIG. 4B, in a second crypto operation sequence CRYPODR2 among the plurality of crypto operation sequences CRYPODR1 to CRYPODRn, the seed material memory 210 may be configured to provide a second seed material including a second entropy input, to the crypto engine 230. The second crypto operation sequence CRYPODR2 may be a crypto operation sequence that comes after the first crypto operation sequence CRYPODR1. In the second crypto operation sequence CRYPODR2, a second seed block SDB2 may be provided to the crypto engine 230 for each of the iterations ITRN1 to ITRNm. The second seed block SDB2 may include a second entropy input ENT2 provided to the instantiate and reseed function unit 200 in the second crypto operation sequence CRYPODR2.

In the first iteration ITRN1 of the second crypto operation sequence CRYPODR2, the crypto engine 230 may receive the second seed block SDB2 and the value of the first initial vector IV1. The value of the first initial vector IV1 may correspond to a value of the first output data OD11 stored in the first storage area RGN1 of the output memory 240 in the first crypto operation sequence CRYPODR1. The crypto engine 230 may perform a crypto operation based on the second seed block SDB2 and the first initial vector IV1, and update a value of the first storage area RGN1 of the output memory 240 by storing a value of the first output data OD21 in the first storage area RGN1 of the output memory 240.

In the second iteration ITRN2 of the second crypto operation sequence CRYPODR2, the crypto engine 230 may receive the second seed block SDB2 and a value of the second initial vector IV2. The value of the second initial vector IV2 may correspond to a value of the second output data OD12 stored in the second storage area RGN2 of the output memory 240 in the first crypto operation sequence CRYPODR1. The crypto engine 230 may perform a crypto operation and store a value of the second output data OD22 in the second storage area RGN2 of the output memory 240, and the value stored in the second storage area RGN2 of the output memory 240 may be updated.

Third to m-1th iterations may be performed in a manner as described above. In the mth iteration ITRNm of the second crypto operation sequence CRYPODR2, the crypto engine 230 may perform a crypto operation based on the second seed block SDB2 and an mth initial vector IVm, and store a value of mth output data OD2m in the mth storage area RGNm of the output memory 240.

Third to n-1th crypto operation sequences may be performed sequentially in a manner as described above, after the second crypto operation sequence CRYPODR2. The second crypto operation sequence CRYPODR2 and the third to n-1th crypto operation sequences may each be referred to as an intermediate crypto operation sequence. In each of the intermediate crypto operation sequences following the second crypto operation sequence CRYPODR2, the controller 220 may omit generation of the control data 310, and the seed material memory 210 may provide another seed material including a newly received entropy input, to the crypto engine 230.

Referring to FIG. 4C, in an nth crypto operation sequence CRYPODRn among the plurality of crypto operation sequences CRYPODR1 to CRYPODRn, an nth entropy input ENTn may be stored in the seed material memory 210 of the instantiate and reseed function unit 200, and an nth seed block SDBn including the nth entropy input ENTn may be repeatedly provided to the crypto engine 230 for each of the iterations ITRN1 to ITRNm. As described above with reference to FIGS. 4A and 4B, in each iteration, the crypto engine 230 may receive a value stored in a corresponding storage area as a value of an initial vector, perform a crypto operation by using the value of the nth seed block SDBn and the corresponding initial vector, and store a value of a corresponding operation result in a corresponding storage area. In the mth iteration ITRNm of the nth crypto operation sequence CRYPODRn, the crypto engine 230 may perform a crypto operation based on the nth seed block SDBn and the mth initial vector IVm, and store the value of the mth output data ODnm in the mth storage area RGNm of the output memory 240. When the mth iteration ITRNm of the nth crypto operation sequence CRYPODRn is completed, the derivation function signal DFS corresponding to an internal state based on first to mth operation results (e.g., ODn1 to ODnm) stored in the output memory 240 may be output.

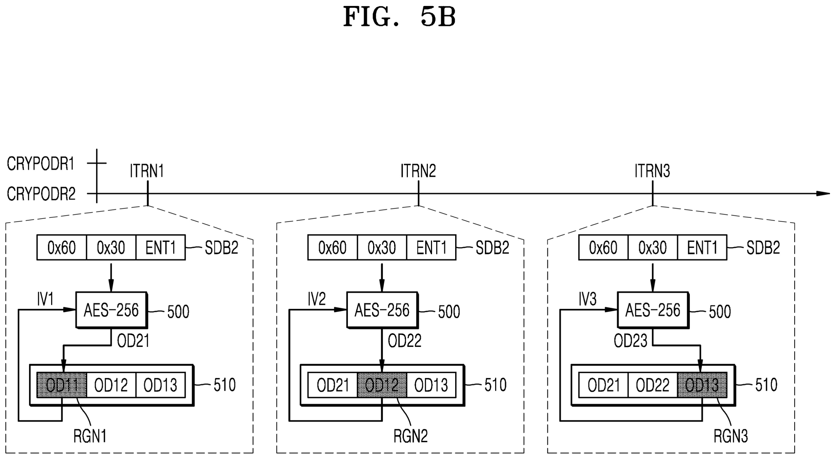

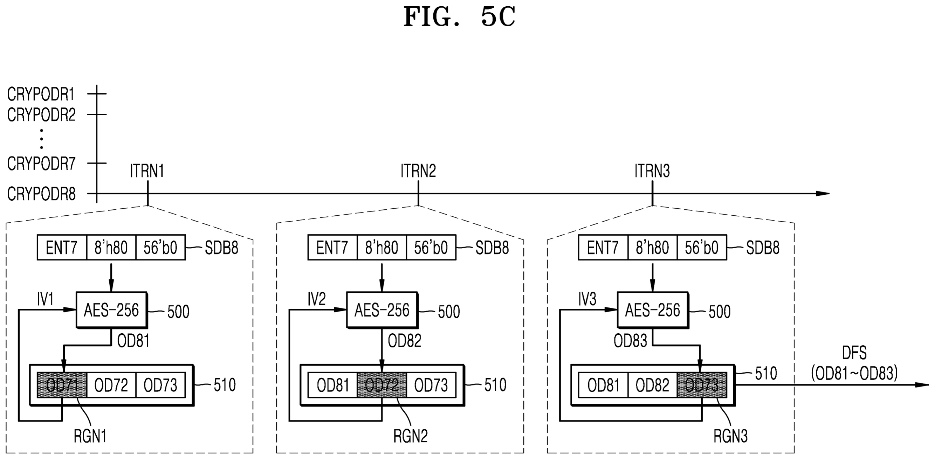

FIGS. 5A, 5B, and 5C are diagrams illustrating embodiments of generating a derivation function signal.

Referring to FIGS. 1, 2, 3, 5A, 5B, and 5C, in embodiments, the random number generation device 110 may be implemented as CTR_DRBG that satisfies the specifications according to the standards (e.g., NIST Special Publication 800-90A and/or 800-90C) as shown in [Table 1] below.

**[Table 1]**

| parameter | specifications |
|---|---|
| DRBG Type | CTR_DRBG |
| Key Size (or Key length) | 256 |
| V Size | 128 |
| Crypto Engine | AES-256 |
| Security Strength(s) | 256 |
| Derivation Function | Used |
| entropy(H) per bit of entropy input | 0.5 |

In the random number generation device 110 having the specifications according to [Table 1], the size (or length) of all entropy inputs required for cryptographic operations, i.e., the size of the total entropy input 320, is 768 bits (e.g., 1.5×s/H=3×256/(2×0.5). The size of the control data 310 includes counter bits, entropy input length bits, output length bits, etc., and is 192 bits (e.g., Counter (32 bit) + 96'b0 (96 bit) + entropy_input_length / 8 (32 bit) + output_length / 8 (32 bit)). The size of the total seed material 330 is 960 bits (e.g., 768+192=960). In AES-256 500, the number of cryptographic operation sequences (n) is 8 (Roundup((768+192)/128)=8). In each crypto operation sequence, the number of repetitions (m) of the crypto operation of the AES-256 500 is 3 based on a ratio of the requested bit length (e.g., a sum of the Key Size (Key_Length) in [Table 1] and a size of the output data of AES-256 (AES_output_len)) to the size of the output data of AES-256 (e.g., (256+128)/128=3). In this case, the number of storage areas allocated to store values of the operation results is also 3.

The AES-256 500 may be an example of the crypto engine 230 of FIG. 2, and an output memory 510 may correspond to the output memory 240 of FIG. 2. When instantiating is performed by CTR_DRBG having the specifications according to [Table 1], an entropy input for configuring the size of the seed material (e.g., 128 bits) required for the AES-256 500 to process at one time is provided to the seed material memory 210. In this case, since the size of the counter and other values of the control data 310 is 128 bits (e.g., 128=32+96), an entropy input is required from a second crypto operation sequence CRYPODR2. Considering the sizes of other values of the control data 310 (e.g., "0x60", "0x30" in FIG. 5B), the size of the entropy input required in the second crypto operation sequence CRYPODR2 is 64 bits. The size of the entropy input required for each of third to seventh crypto operation sequences CRYPODR3 to CRYPODR7 is 128 bits. Considering the size of the total seed material 330 (e.g., 960 bits) and the sizes of other values of the control data 310 (e.g., "8'h80", "56'b0" in FIG. 5C), the size of the entropy input required for an eighth crypto operation sequence CRYPODR8 is 64 bits.

Referring to FIG. 5A, in a first crypto operation sequence CRYPODR1, the seed material memory 210 may be configured to provide the first seed material including the first control data to the crypto engine 230. In the first iteration ITRN1 of the first crypto operation sequence CRYPODR1, the first seed block SDB1 including some values of control data (e.g., "0x1", "96'b0" in FIG. 5A) may be provided to the AES-256 500. Similar to the above-described case with reference to FIG. 4A, the AES-256 500 may perform a crypto operation based on the first seed block SDB1 and the initial vector IV, and store the value of the first output data OD11 in the first storage area RGN1 of the output memory 510. In the second iteration ITRN2 of the first crypto operation sequence CRYPODR1, the counter may be updated from "0x1" to "0x2" by the controller 220, the AES-256 500 may perform a crypto operation, and the value of the second output data OD12 may be stored in the second storage area RGN2 of the output memory 510. In the third iteration ITRN3 of the first crypto operation sequence CRYPODR1, the counter may be updated from "0x2" to "0x3" by the controller 220, and a value of the third output data OD13 generated by the crypto operation of the AES-256 500 may be stored in a third storage area RGN3 of the output memory 510.

Referring to FIG. 5B, in a second crypto operation sequence CRYPODR2, the seed material memory 210 may be configured to provide second seed material including values of second control data (e.g., "0x60", "0x30" of FIG. 5B) and the first entropy input ENT1 to the AES-256 500. The second seed block SDB2 may be provided to the AES-256 500 for each of the first to third iterations ITRN1 to ITRN3. The AES-256 500 may perform a cryptographic operation as described above with reference to FIG. 4B, a value of a corresponding operation result may be stored in a corresponding storage area thereof, and a value of the corresponding storage area may be updated.

The third to seventh crypto operation sequences CRYPODR3 to CRYPODR7 may be performed sequentially in a manner as described above. Referring to FIG. 5C, in the eighth crypto operation sequence CRYPODR8, the eighth seed block SDB8 including a seventh entropy input ENT7 and certain values of the control data 310 (e.g., "8'h80", "56'b0" of FIG. 5C) may be provided to the AES-256 500 for each of the first to third iterations ITRN1 to ITRN3. The AES-256 500 may perform a cryptographic operation, similar to that described above with reference to FIG. 4C, a value of a corresponding operation result may be stored in a corresponding storage area, and the value of the corresponding storage area may be updated. When the third iteration ITRN3 of the eighth crypto operation sequence CRYPODR8 is completed, the derivation function signal DFS corresponding to an internal state based on first to third operation results (e.g., OD81 to OD83) stored in the output memory 510 may be output.

According to the embodiments illustrated in FIGS. 5A, 5B and 5C, the size of the seed material memory 210 is 128 bits, the size of the output memory 510 is 384 bits, and thus the total memory size is 512 bits.

In other embodiments, the random number generation device 110 may be implemented as CTR_DRBG that satisfies the specifications according to the standards (e.g., NIST Special Publication 800-90A and/or 800-90C) as shown in [Table 2] below.

**[Table 2]**

| parameter | specifications |
|---|---|
| DRBG Type | CTR_DRBG |
| Key Size | 256 |
| V Size | 128 |
| Crypto Engine | AES-256 |
| Security Strength(s) | 256 |
| Derivation Function | Used |
| entropy(H) per bit of entropy input | 1 |

The size of the total entropy input 320 of the random number generation device 110 having the specifications according to [Table 2] is 384 bits (e.g., 1.5×s/H=3×256/(2×1)). The size of the control data CTRLD is 192 bits. The size of the total seed material 330 is 576 bits. In AES-256, the number of the plurality of cryptographic operation sequences (n) is 5 (Roundup((384+192)/128)=5). In each crypto operation sequence, the number of repetitions (m) of AES-256 crypto operations is 3. Thus, unlike what is shown in FIGS. 5A, 5B, and 5C, five cryptographic operation sequences may be performed in the random number generation device 110 having the specifications according to [Table 2].

Although the size of the total seed material 330 required in CTR_DRBG having the specifications according to [Table 1] is different from the size of the total seed material 330 required in CTR_DRBG having the specifications according to [Table 2], hardware of the random number generation device 110 implemented with CTR_DRBG may be designed identically. That is, as in the embodiments illustrated in FIGS. 5A, 5B, and 5C, the size of the seed material memory 210 is 128 bits, the size of the output memory 510 is 384 bits, and thus the total memory size is 512 bits. Accordingly, by designing the hardware of the random number generation device 110 for processing seed materials of various lengths identically, manufacturing cost may be reduced and versatility of the random number generation device 110 may be increased.

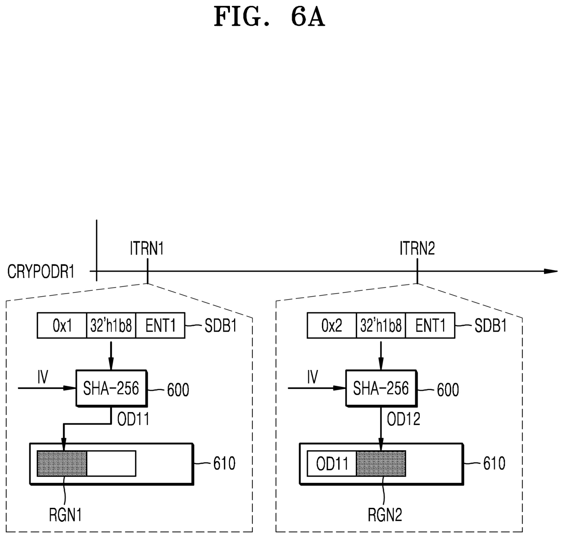

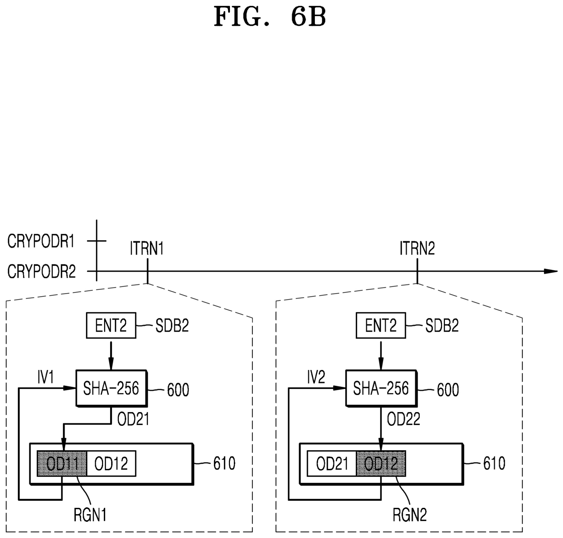

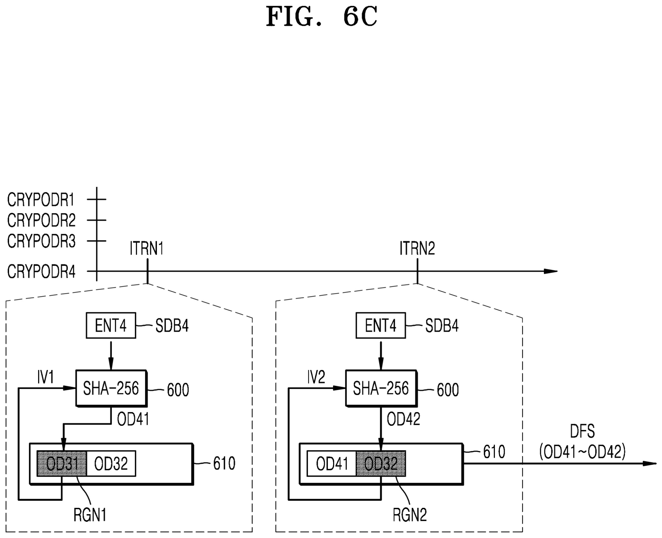

FIGS. 6A, 6B, and 6C are diagrams illustrating embodiments of generating a derivation function signal.

Referring to FIGS. 1, 2, 3, 6A, 6B, and 6C, in embodiments, the random number generation device 110 may be implemented as HASH_DRBG that satisfies the specifications according to the standards (e.g., NIST Special Publication 800-90A and/or 800-90C) as shown in [Table 3] below.

**[Table 3]**

| parameter | specifications |
|---|---|
| DRBG Type | HASH_DRBG |
| K(Key length(or Key size) | 440 |
| C(Constant of seedlen(Seed length)) | 440 |
| Crypto Engine | SHA-256 |
| Security Strength(s) | 256 |
| Derivation Function | Used |
| entropy(H) per bit of entropy input | 0.25 |

The size of the total entropy input 320 of the random number generation device 110 having the specifications according to [Table 3] is 1536 bits (e.g., 3×256/(2×0.25)). The size of the control data CTRLD is 40 bits, including counter bits and output length bits (e.g., Counter (8 bits) + output_length (32 bits)). The size of the total seed material 330 is 1576 bits (e.g., 1536+40=1576). The size of the seed material that SHA-256 600 may process at one time during crypto operations is 512 bits. In the SHA-256 600, the number of crypto operation sequences (n) is 4 (Roundup((1536+40)/512)=4). The size of output data output when the SHA-256 600 performs a cryptographic operation is 256 bits, and the bit length required here may correspond to a key size (e.g., the key size in [Table 3]). In each crypto operation sequence, the number of iterations (m) in which the crypto operation of the SHA-256 600 is repeated is 2 (e.g., K_len / hash_output_len = Roundup (440 / 256)).

The SHA-256 600 is an example of the crypto engine 230 of FIG. 2, and an output memory 610 may correspond to the output memory 240 of FIG. 2. When instantiating is performed by the HASH_DRBG having the specifications according to [Table 3], entropy input for configuring the size of seed material (e.g., 512 bits) required for processing at one time by the SHA-256 600 is provided to and stored in the seed material memory 210. In this case, considering the size of the control data 310, which is 40 bits, the size of the entropy input required in a first crypto operation sequence CRYPODR1 is 472 bits. The size of the entropy input required for each of second and third crypto operation sequences CRYPODR2 and CRYPODR3 is 512 bits. Considering the size of the total seed material 330 (e.g., 1576 bits), the size of the entropy input required in a fourth crypto operation sequence CRYPODR4 is 40 bits.

Referring to FIG. 6A, in the first iteration ITRN1 of the first crypto operation sequence CRYPODR1, the first seed block SDB1 including control data (e.g., "0x1", "32'h1b8" of FIG. 6A) and the first entropy input ENT1 may be provided to the SHA-256 600. The SHA-256 600 may perform a crypto operation based on the first seed block SDB1 and the initial vector IV, and store the value of the first output data OD11 in the first storage area RGN1 of the output memory 610. In the second iteration ITRN2 of the first crypto operation sequence CRYPODR1, the first seed block SDB1 including control data (e.g., "0x2", "32'h1b8" of FIG. 6A) and the first entropy input ENT1 may be provided to the SHA-256 600, and the SHA-256 600 may perform a crypto operation similar to that described above and the value of the second output data OD12 may be stored in the second storage area RGN2 of the output memory 610.

Referring to FIG. 6B, in the second crypto operation sequence CRYPODR2, the second seed block SDB2 including and the second entropy input ENT2 may be provided to the SHA-256 600. Similarly to the above, the SHA-256 600 may perform a cryptographic operation and store a value of a corresponding operation result in a corresponding storage area. Thereafter, the third crypto operation sequence may be performed, and as illustrated in FIG. 6C, in the fourth crypto operation sequence CRYPODR4, a fourth seed block SDB4 including a fourth entropy input ENT4 may be provided to the SHA-256 600, and the SHA-256 600 may perform a crypto operation. When the fourth crypto operation sequence CRYPODR4 is completed, the derivation function signal DFS corresponding to an internal state based on first and second operation results (e.g., OD41 and OD42) stored in the output memory 610 may be output, a V value according to the standards (e.g., NIST Special Publication 800-90A and/or 800-90C) may be transferred to the output memory 610, a C value may be calculated through the calculated V value, and a final result value may be output. In this case, the C value does not use the seed material as input.

According to the embodiments illustrated in FIGS. 6A, 6B, and 6C, the size of the seed material memory 210 is 512 bits, and the size of the output memory 610 is 512 bits, and thus the total memory size is 1024 bits.

Although the embodiments are illustrated based on CTR_DRBG or HASH_DRBG in FIGS. 4A to 6C, the disclosure is not limited thereto, and the embodiments may also be applied to HMAC_DRBG.

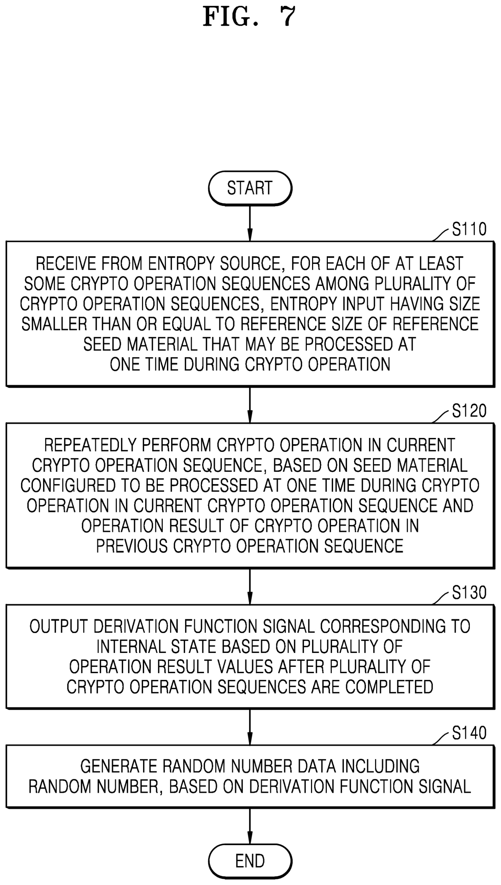

FIG. 7 is a flowchart illustrating an operating method of a random number generation device, according to embodiments.

Referring to FIGS. 1 and 7, in operation S110, the instantiate and reseed function unit 111 of the random number generation device 110 may receive, from the entropy source 100, for each of at least some crypto operation sequences among a plurality of crypto operation sequences, the entropy input ENT having a size smaller than or equal to a reference size of a reference seed material that may be processed at one time during a crypto operation.

In operation S120, the instantiate and reseed function unit 111 of the random number generation device 110 may repeatedly perform the crypto operation in a current crypto operation sequence, based on seed material configured to be processed at one time during the crypto operation in the current crypto operation sequence and an operation result of the crypto operation in a previous crypto operation sequence.

In operation S130, the instantiate and reseed function unit 111 of the random number generation device 110 may output the derivation function signal DFS corresponding to an internal state based on a plurality of operation result values after the plurality of crypto operation sequences are completed.

In operation S140, the random number generation unit 112 of the random number generation device 110 may generate the random number data RND including a random number based on the derivation function signal DFS.

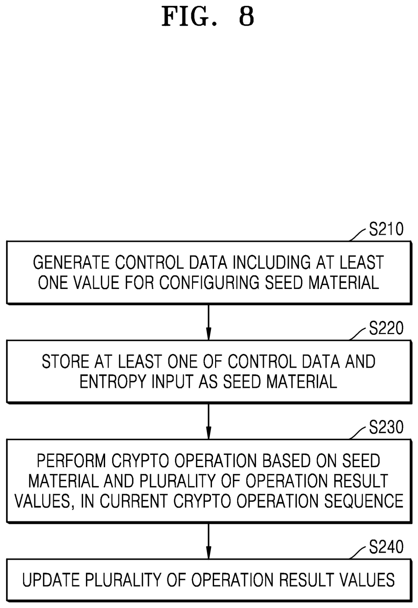

FIG. 8 is a flowchart for describing an embodiment of operation S120 of FIG. 7.

Referring to FIG. 2 and FIG. 8, operation S120 according to an embodiment may include operation S210, operation S220, operation S230, and operation S240. For example, the operations S210 to S240 may be performed by the instantiate and reseed function unit 200 in FIG. 2.

In operation S210, the controller 220 of the instantiate and reseed function unit 200 may generate the control data CTRLD including at least one value for configuring the seed material.

In operation S220, the seed material memory 210 of the instantiate and reseed function unit 200 may store at least one of the control data CTRLD and the entropy input ENT as the seed material SDMTL.

In operation S230, the crypto engine 230 of the instantiate and reseed function unit 200 may perform a crypto operation based on the seed material and the plurality of operation result values (e.g., a corresponding operation result value of the plurality of operation result values of the previous crypto operation sequence) in the current crypto operation sequence.

In operation S240, the crypto engine 230 of the instantiate and reseed function unit 200 may update the plurality of operation result values.

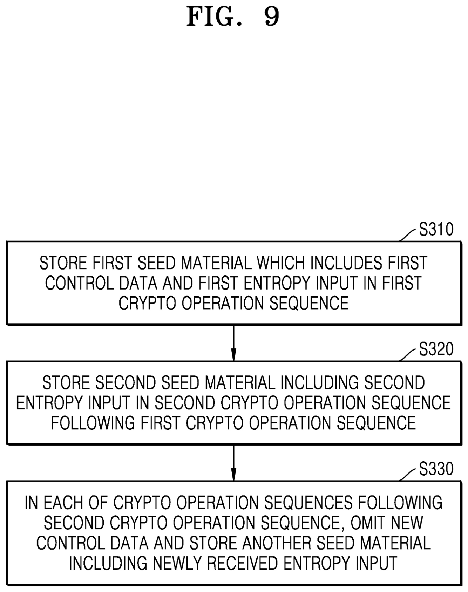

FIG. 9 is a flowchart for describing an embodiment of operation S220 of FIG. 8.

Referring to FIG. 9, operation S220 according to an embodiment may include operation S310 and operation S320.

In operation S310, in a first crypto operation sequence, the seed material memory 210 may store a first seed material including first control data and a first entropy input. In the first crypto operation sequence, the crypto engine 230 may receive the first seed material from the seed material memory 210 and perform a crypto operation.

In operation S320, in a second crypto operation sequence following the first crypto operation sequence, the seed material memory 210 may store the second seed material including a second entropy input. In the second crypto operation sequence, the crypto engine 230 may receive the second seed material from the seed material memory 210 and perform a crypto operation.

Operation S220 according to an embodiment may further include operation S330. In operation S330, in each of the crypto operation sequences following the second crypto operation sequence, the seed material memory 210 may omit new control data and store another seed material including a newly received entropy input.

The embodiment described above with reference to FIG. 9 may correspond to the embodiments described above with reference to FIGS. 4A, 4B, and 4C. Alternatively, the embodiment described above with reference to FIG. 9 may correspond to the embodiments described above with reference to FIGS. 6A, 6B, and 6C.

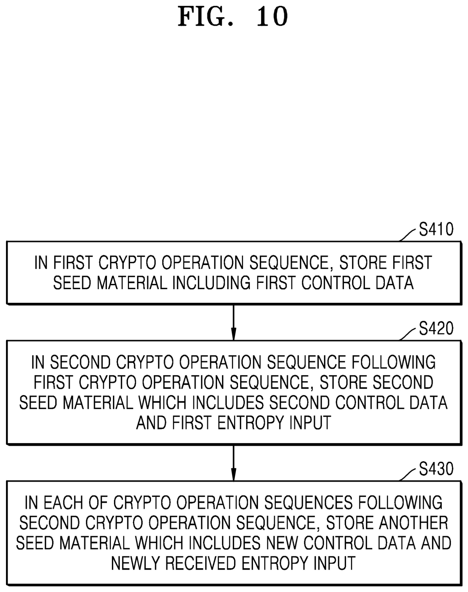

FIG. 10 is a flowchart illustrating another embodiment of operation S220 of FIG. 8.

Referring to FIG. 10, operation S220 according to another embodiment may include operation S410 and operation S420.

In operation S410, in the first crypto operation sequence, the seed material memory 210 may store the first seed material including the first control data.

In operation S420, in the second crypto operation sequence following the first crypto operation sequence, the seed material memory 210 may store the second seed material including the second control data and the first entropy input.

Operation S220 according to an embodiment may further include operation S430. In operation S430, in each of the crypto operation sequences following the second crypto operation sequence, the seed material memory 210 may store another seed material including new control data and a newly received entropy input.

The embodiment described above with reference to FIG. 10 may correspond to the embodiments described above with reference to FIGS. 5A, 5B, and 5C.

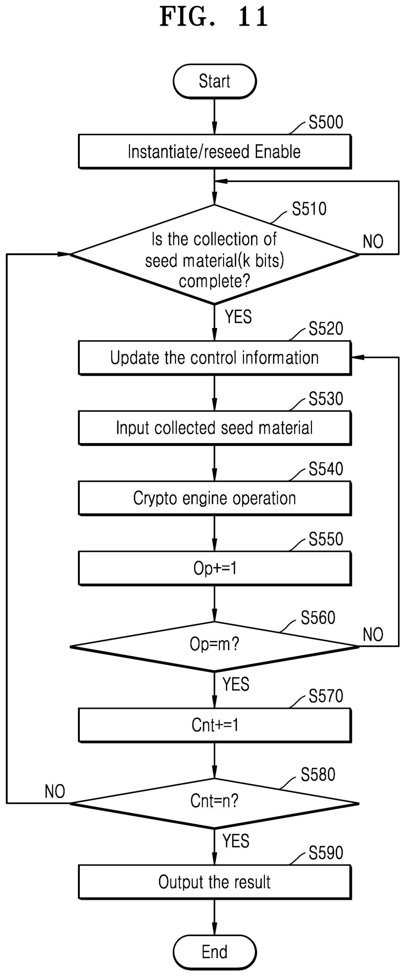

FIG. 11 is a flowchart illustrating a method of generating a derivation function signal, according to embodiments.

In operation S500, instantiate or reseed may be enabled.

In operation S510, it is determined whether collection of k-bit seed material is completed. For example, k bits may be the size of seed material that the crypto engine 230 may process at one time during a crypto operation in one crypto operation sequence. That is, k bits may be the reference size of the reference material. The collection of k-bit seed materials may be, for example, that k-bit seed materials are stored in the seed material memory 210.

In operation S520, control information may be updated. The control information may refer to values included in the control data CTRLD described above.

In operation S530, the collected seed material may be input to the crypto engine 230.

In operation S540, an operation of the crypto engine 230 (e.g., crypto operation) may be performed.

In operation S550, a counter (e.g., Op) may be incremented by one.

In operation S560, it is determined whether the counter (e.g., Op) has reached a predetermined number of repetitions (e.g., m). If the counter (e.g., Op) does not reach the number of repetitions (e.g., m), operation S520 may be performed.

When the counter (e.g., Op) reaches the number of repetitions (e.g., m), in operation S570, the value of the crypto operation sequence (e.g., Cnt) may be increased by one. In operation S580, it is determined whether the value of the crypto operation sequence (e.g., Cnt) reaches a predetermined number (e.g., n). If the value of the crypto operation sequence (e.g., Cnt) does not reach the predetermined number (e.g., n), operation S510 may be performed.

When the value of the crypto operation sequence (e.g., Cnt) reaches the predetermined number (e.g., n), in operation S590, the result may be output. For example, values stored in the output memory 240 may be output to the random number generation unit 112.

According to embodiments, a crypto operation of the crypto engine 230 may be processed in parallel order by using as much entropy input as necessary in the crypto engine 230 when performing instantiate or reseed, processed intermediate values may be temporarily stored in the output memory 240, and previously processed intermediate values may be applied as the value of the initial vector IV when performing a crypto operation by using a subsequent entropy input.

It will be apparent to those skilled in the art that the structure of the disclosure may be variously modified or changed without departing from the scope of the disclosure. If the modifications and variations of the disclosure come within the scope of the claims below and their equivalents, the disclosure is deemed to include the modifications and variations of the disclosure.

At least one of the components, elements, modules or units (collectively "components" in this paragraph) represented by a block in the drawings, may be embodied as various numbers of hardware, software and/or firmware structures that execute respective functions described above, according to one or more example embodiments. For example, at least one of these components may use a direct circuit structure, such as a memory, a processor, a logic circuit, a look-up table, etc. that may execute the respective functions through controls of one or more microprocessors or other control apparatuses. Also, at least one of these components may be specifically embodied by a module, a program, or a part of code, which contains one or more executable instructions for performing specified logic functions, and executed by one or more microprocessors or other control apparatuses. Further, at least one of these components may include or may be implemented by a processor such as a central processing unit (CPU) that performs the respective functions, a microprocessor, or the like. Two or more of these components may be combined into one single component which performs all operations or functions of the combined two or more components. Also, at least part of the functions of at least one of these components may be performed by another of these components. Further, although a bus is not illustrated in the above block diagrams, communication between the components may be performed through the bus. Functional aspects of the above example embodiments may be implemented in algorithms that execute on one or more processors. Furthermore, the components represented by a block or processing steps may employ any number of related art techniques for electronics configuration, signal processing and/or control, data processing and the like.

While the disclosure has been particularly shown and described with reference to embodiments thereof, it will be understood by those of ordinary skill in the art that various changes in form and details may be made therein without departing from scope of the disclosure as defined by the following claims.

## Claims

1. A random number generation device (110) comprising:
an instantiate and reseed function logic (111) configured to:
receive, from an entropy source (100), for each of at least some crypto operation sequences among a plurality of crypto operation sequences, an entropy input (ENT) having a size smaller than or equal to a reference size of a reference seed material that may be processed at one time during a crypto operation;
repeatedly perform the crypto operation in a current crypto operation sequence, based on a seed material (SDB) configured to be processed at one time during the crypto operation in the current crypto operation sequence and an operation result (IV) of the crypto operation in a previous crypto operation sequence; and
output a derivation function signal (DFS) corresponding to an internal state, based on a plurality of operation result values after the plurality of crypto operation sequences are completed; and
a random number generation logic (112) configured to generate random number data comprising a random number (RND), based on the derivation function signal (DFS).

2. The random number generation device (110) of claim 1, wherein the instantiate and reseed function logic (111) comprises:
a seed material memory (111a, 210) configured to receive at least one of the entropy input (ENT) and control data (CTRLD) which comprises at least one value for configuring the seed material (SDB), and configured to store the received at least one of the entropy input (ENT) and the control data (CTRLD) as the seed material (SDB);
a controller (111b, 220) configured to generate the control data (CTRLD);
an output memory (111d, 240) comprising a plurality of storage areas (241) in which a plurality of operation result values of the previous crypto operation sequence are stored, respectively; and
a crypto engine (111c, 230) configured to, in each of the repeatedly performed crypto operation, perform the crypto operation based on the seed material (SDB) and a corresponding operation result value (IV) of the plurality of operation result values of the previous crypto operation sequence, and configured to update the plurality of operation result values (IV) of the previous crypto operation sequence by storing an operation result value (OD) of the crypto operation in a corresponding storage area (241) in the output memory (111d, 240).

3. The random number generation device (110) of claim 2, wherein the seed material memory (111a, 210) is further configured to provide a completion signal (DNS) to the controller (111b, 220) based on the entropy input (ENT), and
wherein the controller (111b, 220) is configured to generate or update the control data (CTRLD) based on the completion signal (DNS), and provide a control signal (CECTRLS) for controlling the crypto engine (111c, 230) to the crypto engine (111c, 230), and
wherein the crypto engine (111c, 230) is configured to perform the crypto operation based on the control signal (CECTRLS), and store the corresponding operation result value (OD) in the corresponding storage area (241).

4. The random number generation device (110) of claim 2 or 3, wherein the seed material memory (111a, 210) is further configured to:
provide, to the crypto engine (111c, 230), a first seed material (SDB1) comprising first control data (0x1, LEN; 0x2, LEN; ... 0xm, LEN) and a first entropy input (ENT1) in a first crypto operation sequence (CRYPODR1) among the plurality of crypto operation sequences (CRYPODR1 ... CRYPODRn); and
provide, to the crypto engine (111c, 230), a second seed material (SDB2) comprising a second entropy input (ENT2) in a second crypto operation sequence (CRYPODR2) following the first crypto operation sequence (CRYPODR1).

5. The random number generation device (110) of claim 4, wherein the controller (111b, 220) is further configured to omit, in each of crypto operation sequences following the second crypto operation sequence (CRYPODR2), generation of the control data (0x1, LEN; 0x2, LEN; ... 0xm, LEN), and
wherein the seed material memory (111a, 210) is further configured to provide the crypto engine (111c, 230) with another seed material (SDB3, ... SDBn) comprising a newly received entropy input (ENT3, ... ENTn) in each of crypto operation sequences (CRYPODR3, ... CRYPODRn) after the second crypto operation sequence (CRYPODR2).

6. The random number generation device (110) of claim 2 or 3, wherein the seed material memory (111a, 210) is further configured to:
provide, to the crypto engine (111c, 230), a first seed material (SDB1) comprising first control data (0x1, 96'b0; 0x2, 96'b0; 0x3, 96'b0) in a first crypto operation sequence (CRYPODR1) among the plurality of crypto operation sequences (CRYPODR1 ... CRYPODR8), and
provide, to the crypto engine (111c, 230), a second seed material (SDB2) comprising second control data (0x60, 0x30; 0x60, 0x30; 0x60, 0x30) and a first entropy input (ENT1; ENT1; ENT1), in a second crypto operation sequence (CRYPODR2) following the first crypto operation sequence (CRYPODR1).

7. The random number generation device (110) of any one of claims 2 to 6, wherein the control data (CTRLD) comprises a counter (m) indicating a number of times the crypto operation is repeated in one crypto operation sequence.

8. The random number generation device (110) of any one of claims 2 to 7, wherein the seed material memory (111a, 210) has the reference size of the reference seed material.

9. The random number generation device (110) of any one of claims 2 to 8, wherein a size of the output memory (111d, 240) is determined based on a size of output data (OD) comprising a value of an operation result output by the crypto engine (111c, 230) and a number of times (m) the crypto operation is repeated in one crypto operation sequence.

10. An operating method of a random number generation device (110), the operating method comprising:
receiving (S110), from an entropy source (100), for each of at least some crypto operation sequences among a plurality of crypto operation sequences, an entropy input (ENT) having a size smaller than or equal to a reference size of a reference seed material that may be processed at one time in a crypto operation;
repeatedly performing (S120) the crypto operation in a current crypto operation sequence based on a seed material (SDB) configured to be processed at one time during the crypto operation in the current crypto operation sequence and an operation result of the crypto operation in a previous crypto operation sequence;
outputting (S130) a derivation function signal (DFS) corresponding to an internal state, based on a plurality of operation result values (OD) after the plurality of crypto operation sequences are completed; and
generating (S140) random number data comprising a random number (RND), based on the derivation function signal (DFS).

11. The operating method of claim 10, wherein the repeatedly performing (S120) the crypto operation comprises:
generating (S210) control data comprising at least one value for configuring the seed material;
storing (S220) at least one of the control data and the entropy input as the seed material;
performing (S230), in each of the repeatedly performed crypto operations of the current crypto operation sequence, the crypto operation based on the seed material and a corresponding operation result value of a plurality of operation result values of the previous crypto operation sequence; and
updating (S240) the plurality of operation result values of the previous crypto operation sequence based on an operation result value of the crypto operation.

12. The operating method of claim 11, wherein the storing (S220) as the seed material comprises:
storing (S310) a first seed material comprising first control data and a first entropy input in a first crypto operation sequence; and
storing (S320) a second seed material comprising a second entropy input in a second crypto operation sequence following the first crypto operation sequence.

13. The operating method of claim 12, wherein the storing (S220) as the seed material further comprises, in each of crypto operation sequences after the second crypto operation sequence, omitting (S330) generation of new control data and storing another seed material comprising a newly received entropy input.

14. The operating method of claim 11, wherein the storing (S220) as the seed material comprises:
storing (S410) a first seed material comprising first control data in a first crypto operation sequence; and
storing (S420) a second seed material comprising second control data and a first entropy input in a second crypto operation sequence following the first crypto operation sequence.

15. The operating method of claim 14, wherein the storing (S220) as the seed material further comprises storing (S430) another seed material comprising new control data and a newly received entropy input in each of the crypto operation sequences after the second crypto operation sequence.
